# EUROPÄISCHE PATENTSCHRIFT

(11) **EP 3 623 672 B1**
(45) Veröffentlichungstag und Bekanntmachung des Hinweises auf die Patenterteilung: **27.04.2022**
(21) Anmeldenummer: 19184622.9
(22) Anmeldetag: 05.07.2019
(51) Int. Cl.: F16L 37/367

(54) **ABSPERRVORRICHTUNG**
SHUT-OFF DEVICE
DISPOSITIF D'ARRÊT

(30) Priorität: 17.09.2018 DE 102018122668
(43) Veröffentlichungstag der Anmeldung: 18.03.2020
(73) Patentinhaber: CLAAS Selbstfahrende Erntemaschinen GmbH, 33428 Harsewinkel (DE)
(72) Erfinder: Forte, Ingo, 59329 Liesborn (DE); Rempel, Viktor, 33428 Harsewinkel (DE); Moldenhauer, Christoph, 65597 Hünfelden Nauheim (DE); Stiller, Thorsten, 32791 Lage (DE)
(74) Vertreter: CLAAS Gruppe

(56) Entgegenhaltungen:
- CH-A- 318 562
- US-A- 913 866
- US-A- 2 499 383

## Beschreibung

Die vorliegende Erfindung betrifft eine Absperrvorrichtung gemäß dem Oberbegriff des Anspruches 1. Weiterhin betrifft die vorliegende Erfindung eine landwirtschaftliche Arbeitsmaschine gemäß dem Oberbegriff des Anspruches 9 sowie ein Verfahren zum Trennen und Verbinden einer Leitung mittels einer Absperrvorrichtung gemäß dem Oberbegriff des Anspruches 11.

Eine Absperrvorrichtung, die in einem Koppelbereich zwischen einem ersten Leitungsabschnitt und einem zweiten Leitungsabschnitt einer Leitung, insbesondere eines Hydrauliksystems, angeordnet ist, wobei die Absperrvorrichtung eine Durchlassstellung, in welcher einander zugewandte Öffnungen der beiden Leitungsabschnitte fluidleitend verbunden sind, und eine Schließstellung, in welcher der Durchfluss unterbrochen ist, aufweist, ist aus der DE 19 00 836 U1 bekannt. Die DE 19 00 836 U1 beschreibt eine Absperrvorrichtung, die an einem Flansch einer Rohleitung eines Kühlwassersystems einer Brennkraftmaschine angeordnet ist, wobei die Absperrvorrichtung in eine Durchlassstellung, in welcher die beiden Leitungsabschnitte fluidleitend verbunden sind, und eine Schließstellung überführbar ist. Durch die aus der DE 19 00 836 U1 bekannte Absperrvorrichtung lässt sich die fluidleitende Verbindung unterbrechen, ein Trennen der beiden Leitungsabschnitte im Koppelbereich ist hingegen nicht leckagefrei möglich. Zum Auftrennen der Leitung im Koppelbereich ist es erforderlich, das in der Leitung bzw. dem Kühlwassersystem enthaltene Fluid abzulassen.

Die CH 318 562 offenbart eine Leitung mit einer Absperrvorrichtung nach dem Oberbegriff des Anspruchs 1.

Somit liegt der Erfindung die Aufgabe zugrunde, eine Leitung mit einer Absperrvorrichtung, eine landwirtschaftliche Arbeitsmaschine sowie ein Verfahren zum Trennen und Verbinden einer Leitung mittels einer Absperrvorrichtung weiterzubilden, die den Nachteil des Standes der Technik vermeiden und insbesondere eine weitgehend leckagefrei Trennung zweier Leitungsabschnitte einer Leitung ermöglichen ohne ein Ablassen des darin enthaltenen Fluides erlauben.

Diese Aufgabe wird durch eine Absperrvorrichtung mit den Merkmalen des Anspruches 1 gelöst. Weiterhin wird die Aufgabe durch eine landwirtschaftliche Arbeitsmaschine gemäß dem Anspruch 9 sowie ein Verfahren zum Trennen und Verbinden einer Leitung mittels einer Absperrvorrichtung gemäß dem Anspruch 11 gelöst.

Vorteilhafte Weiterbildungen sind Gegenstand der hiervon abhängigen Unteransprüche.

Gemäß dem Anspruch 1 wird eine Absperrvorrichtung vorgeschlagen, die in einem Koppelbereich zwischen einem ersten Leitungsabschnitt und einem zweiten Leitungsabschnitt zumindest einer Leitung, insbesondere eines Hydrauliksystems, angeordnet ist, wobei die Absperrvorrichtung eine Durchlassstellung, in welcher die beiden Leitungsabschnitte fluidleitend verbunden sind, und eine Schließstellung, in welcher der Durchfluss unterbrochen ist, aufweist. Erfindungsgemäß weisen der erste Leitungsabschnitt in dem Koppelbereich einen Koppelflansch auf, der mit einem Verteilerblock der Absperrvorrichtung verbindbar ist, an dem der zweite Leitungsabschnitt angeschlossen ist, wobei dem Koppelflansch ein erster Schieber und dem Verteilerblock ein zweiter Schieber zugeordnet ist, wobei die beiden Schieber eine Doppelschieberanordnung bilden und wobei durch ein Bewegen der Doppelschieberanordnung die Absperrvorrichtung von der Durchlassstellung in die Schließstellung und umgekehrt überführbar ist. Auf diese Weise lassen sich der erste Leitungsabschnitt und der zweite Leitungsabschnitt gleichzeitig voneinander trennen, ohne dass es einer Entleerung der Leitung bedarf.

Hierbei ist die Doppelschieberanordnung zwischen dem Koppelflansch und dem Verteilerblock angeordnet. Auf diese Weise lassen sich der Koppelflansch und der Verteilerblock der Absperrvorrichtung durch die Betätigung der Doppelschieberanordnung gleichzeitig von der Durchlassstellung in die Schließstellung und umgekehrt überführen.

Insbesondere können der erste Schieber und der zweite Schieber in Schließstellung der Absperrvorrichtung voneinander trennbar sein. Der erste Schieber bildet ein separates Verschlusselement für den Koppelflansch und der zweite Schieber bildet ein separates Verschlusselement für den Verteilerblock.

Bevorzugt sind der erste Schieber und der zweite Schieber in Ausbildung der Doppelschieberanordnung parallel zueinander verlaufend angeordnet. Dadurch können beide Schieber durch eine gemeinsame Bewegung betätigt werden, um die Absperrvorrichtung von der Durchlassstellung in die Schließstellung und umgekehrt zu überführen. Dabei kann die Bewegung der Doppelschieberanordnung entlang einer vertikal zur Längsachse der Leitungsabschnitte, d.h. in radialer Richtung der Leitungsabschnitte, verlaufenden Bewegungsbahn erfolgen. Vorteilhaft ist hierbei, dass der erste Schieber und der zweite Schieber in Ausbildung der Doppelschieberanordnung formschlüssig miteinander verbunden sein können. Auf diese Weise kann eine ungewollte Relativbewegung zwischen dem ersten Schieber und dem zweiten Schieber verhindert werden. Hierzu kann an dem ersten bzw. dem zweiten Schieber ein zylindrischer Stift angeordnet sein, welcher in eine korrespondierende Öffnung an dem zweiten bzw. dem ersten Schieber eingreift, wenn die beiden Schieber als Doppelschieberanordnung parallel zueinander verlaufend angeordnet sind.

Erfindungsgemäß weisen der erste Schieber und der zweite Schieber jeweils zumindest eine Führungsausnehmung auf, die sich achsparallel zur Längsachse des jeweiligen Schiebers erstrecken. Vorzugsweise sind jeweils zwei Führungsausnehmungen vorgesehen, die jeweils parallel zueinander verlaufend an dem ersten Schieber und dem zweiten Schieber angeordnet sind. Dabei können sich Befestigungsmittel durch die Führungsausnehmungen erstrecken, mit denen der erste Schieber und der zweite Schieber in der Durchlassstellung der Absperrvorrichtung an dem Koppelflansch und dem Verteilerblock lösbar befestigbar sind. Die sich durch die Führungsausnehmungen erstreckenden Befestigungsmittel und die formschlüssige Verbindung zwischen dem ersten Schieber und dem zweiten Schieber bewirken, dass ein Verkanten während der Bewegung der Doppelschieberanordnung vermieden wird. In der Schließstellung der Absperrvorrichtung kann der erste Schieber mittels der Befestigungsmittel von dem zweiten Schieber und dem Verteilerblock gelöst mittels einer separaten Schraubverbindung mit dem Koppelflansch verbunden werden. Der zweite Schieber kann in der Schließstellung der Absperrvorrichtung mittels einer separaten Schraubverbindung mit dem Verteilerblock verbunden werden.

Insbesondere können der erste Schieber und der zweite Schieber jeweils einen Betätigungsabschnitt aufweisen, mittels derer die beiden Schieber manuell betätigbar sind, um die Schieber von der Durchlassstellung in die Schließstellung und umgekehrt zu überführen. Der Betätigungsabschnitt kann bevorzugt an dem der formschlüssigen Verbindung gegenüberliegenden Seite des ersten Schiebers und des zweiten Schiebers angeordnet sein.

Weiterhin kann die Bewegung zum Überführen des ersten Schiebers und des zweiten Schiebers von der Durchlassstellung in die Schließstellung und umgekehrt durch zumindest einen Anschlag begrenzbar sein. Besonders bevorzugt bildet die zumindest eine Führungsausnehmung des ersten Schiebers oder des zweiten Schiebers den Anschlag. Hierzu kann die zumindest eine Führungsausnehmung des ersten Schiebers kürzer ausgeführt sein, als die zumindest eine Führungsausnehmung des zweiten Schiebers.

Zur Ausbildung als Verschlusselement des ersten Leitungsabschnittes und des zweiten Leitungsabschnittes können der erste Schieber und der zweite Schieber jeweils eine Durchgangsöffnung und eine benachbart angeordnete Sperrfläche aufweisen. Dabei ist an der jeweiligen Sperrfläche auf ihrer dem jeweiligen Leitungsabschnitt zugewandten Seite ein ringförmiges Dichtelement angeordnet, welches in der Schließstellung der Absperrvorrichtung koaxial zu den Durchbohrungen in dem Koppelflansch bzw. dem Verteilerblock positioniert sind, um diese in Umfangsrichtung abzudichten.

Des Weiteren wird die eingangs gestellte Aufgabe durch eine landwirtschaftliche Arbeitsmaschine gelöst. Die landwirtschaftliche Arbeitsmaschine umfasst zumindest einen Riementrieb, der sich abschnittsweise in Längsrichtung der Arbeitsmaschine parallel zur Wandung eines Maschinengehäuses der Arbeitsmaschine erstreckt, sowie ein Hydrauliksystem, welches zumindest zwei Leitungen aufweist, die eine durch den Riementrieb zu der Wandung beabstandete Anordnung aufweisen, wobei die zumindest zwei Leitungen einen ersten Leitungsabschnitt und einen zweiten Leitungsabschnitt aufweisen, die den Riementrieb abschnittsweise durchsetzen, wobei der erste Leitungsabschnitt und der zweite Leitungsabschnitt der jeweiligen Leitung nach einem der Ansprüche 1 bis 8 durch jeweils eine Absperrvorrichtung trennbar miteinander verbunden sind. Mittels der Absperrvorrichtung sind die Leitungsabschnitte der Rohre des Hydrauliksystems druckverlustfrei auftrennbar. Die den Riementrieb abschnittsweise durchsetzenden, d.h. den Riementrieb räumlich überlagernd angeordneten, Leitungen sind auftrennbar, um eine Zugänglichkeit zu dem dahinter befindlichen Riementrieb, insbesondere einem Antriebsriemen des Riementriebes, zu gewährleisten. Insbesondere kann das Hydrauliksystem als ein hydrostatisches Fahrantriebssystem der Arbeitsmaschine ausgebildet sein. Erfindungsgemäß wird somit ein einfaches kostengünstiges und druckverlustfreies Öffnen des Leitungssystems des Fahrantriebssystems im Wartungsfall des Riementriebes ermöglicht, indem die fluidleitende Verbindung der Leitungsabschnitte des Fahrantriebssystem durch die Absperrvorrichtung zunächst gesperrt und anschließend druckverlustfrei aufgetrennt werden kann.

Weiterhin wird die Aufgabe durch ein Verfahren mit den Merkmalen des Anspruches 11 gelöst.

Gemäß dem Anspruch 11 wird ein Verfahren zum Trennen und Verbinden einer Leitung mittels einer Absperrvorrichtung vorgeschlagen, die in einem Koppelbereich zwischen einem ersten Leitungsabschnitt und einem zweiten Leitungsabschnitt der Leitung eines Hydrauliksystems, insbesondere für eine landwirtschaftliche Arbeitsmaschine, angeordnet wird, wobei die Absperrvorrichtung eine Durchlassstellung, in welcher die beiden Leitungsabschnitte fluidleitend verbunden werden, und eine Schließstellung, in welcher der Durchfluss unterbrochen wird, aufweist, wobei der erste Leitungsabschnitt in dem Koppelbereich einen Koppelflansch aufweist, der mit einem Verteilerblock der Absperrvorrichtung verbunden wird, an dem der zweite Leitungsabschnitt angeschlossen wird, wobei dem Koppelflansch ein erster Schieber und dem Verteilerblock ein zweiter Schieber zugeordnet ist, wobei die beiden Schieber eine Doppelschieberanordnung bilden und wobei durch ein Bewegen der Doppelschieberanordnung die Absperrvorrichtung von der Durchlassstellung in die Schließstellung und umgekehrt überführt wird, wobei in der Schließstellung der Absperrvorrichtung der erste Leitungsabschnitt von dem ersten Schieber und der zweite Leitungsabschnitt von dem zweiten Schieber verschlossen wird, so dass die beiden Leitungsabschnitte voneinander trennbar sind.

Erfindungsgemäß trennt die Absperrvorrichtung die Leitung nach einem der Ansprüche 1 bis 8.

Die vorliegende Erfindung wird nachstehend anhand eines in den Zeichnungen dargestellten Ausführungsbeispieles näher erläutert.

Es zeigen:
- Fig. 1: eine schematische Teilansicht eines Antriebssystems einer landwirtschaftlichen Arbeitsmaschine;
- Fig. 2: eine schematische Darstellung einer zwischen einem ersten Leitungsabschnitt und einem zweiten Leitungsabschnitt einer Hydraulikleitung angeordneten Absperrvorrichtung;
- Fig. 3: eine schematische Darstellung der mittels der Absperrvorrichtung verschlossenen und voneinander getrennten Leitungsabschnitte;
- Fig. 4: eine schematische Ansicht eines ersten Schiebers der Absperrvorrichtung;
- Fig. 5: eine schematische Ansicht eines zweiten Schiebers der Absperrvorrichtung;
- Fig. 6: eine Seitenansicht eines Verteilerblocks der Absperrvorrichtung;
- Fig. 6a: eine Vorderansicht A gemäß Fig. 6;
- Fig. 6b: eine Rückansicht B Gemäß Fig. 6.

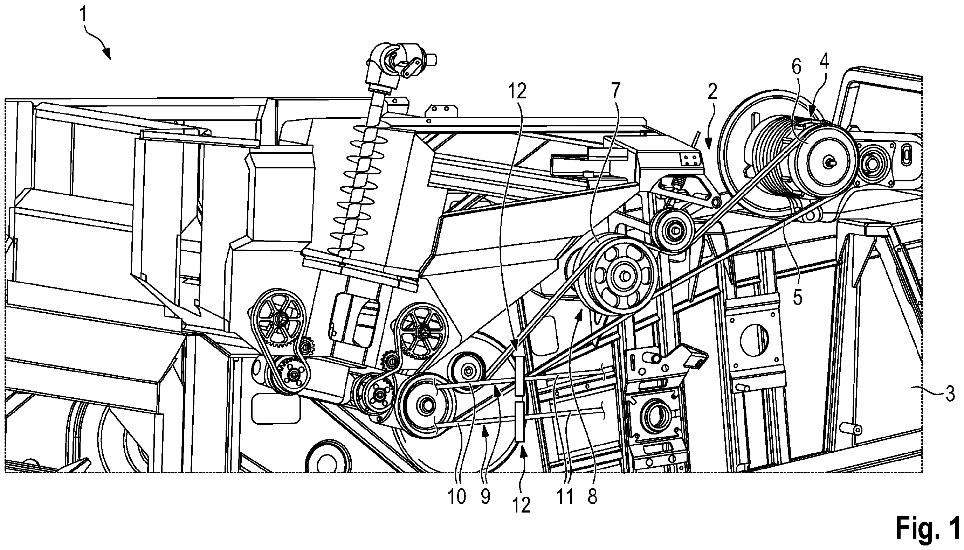

Die Darstellung in Fig. 1 zeigt eine Teilansicht eines Antriebssystems einer landwirtschaftlichen Arbeitsmaschine 1. Die landwirtschaftliche Arbeitsmaschine 1 kann beispielsweise als ein Mähdrescher oder Feldhäcksler ausgeführt sein. Das Antriebssystem ist als ein Riementrieb 2 ausgebildet und an einer Wandung eines Maschinengehäuses 3 angeordnet. Der Riementrieb 2 erstreckt sich im Wesentlichen parallel zu der Wandung des Maschinengehäuses 3. Das Antriebssystem umfasst ein Verteilergetriebe 4, welches von einem als Verbrennungsmotor ausgeführten, nicht dargestellten Antrieb angetrieben ist. Ein Riemen 5 verbindet eine Abtriebsscheibe 6 des Verteilergetriebes 4 mit einer Antriebsscheibe 7 eines Vorgelegepunktes 8.

Die landwirtschaftliche Arbeitsmaschine 1 umfasst ein Hydrauliksystem, welches als hydrostatischer Fahrantrieb ausgebildet ist. Der Fahrantrieb weist einen geschlossenen hydraulischen Arbeitskreis auf, in dem zumindest eine Hydropumpe mit verstellbarem Fördervolumen sowie zwei jedem Radantrieb zugeordnete Hydromotoren mit konstantem oder variablem Schluckvolumen vorgesehen sind. Das als hydrostatischer Fahrantrieb ausgebildete Hydrauliksystem umfasst zumindest zwei Leitungen 9, die jeweils einen ersten Leitungsabschnitt 10 und einen zweiten Leitungsabschnitt 11 aufweisen. Die beiden Leitungsabschnitte 10, 11 der Leitungen 9 können jeweils als eine flexible Schlauchleitung ausgeführt sein. Denkbar ist auch, dass jeweils ein Leitungsabschnitt der Leitungen 9 als flexible Schlauchleitung und der andere Leitungsabschnitt als Rohrleitung ausgeführt ist. Der erste Leitungsabschnitt 10 und der zweite Leitungsabschnitt 11 der jeweiligen Leitung 9 sind jeweils durch eine Absperrvorrichtung 12 trennbar miteinander verbunden. Die Absperrvorrichtung 12 dient der unterbrechbaren fluidleitenden Verbindung des ersten Leitungsabschnittes 10 und des zweiten Leitungsabschnittes 11 der jeweiligen Leitung 9 miteinander. Die beiden Leitungen 9 sind durch den Riementrieb 2 zu der Wandung beabstandet angeordnet, wobei die Leitungen 9 den Riementrieb 2 abschnittsweise durchsetzen. Für die Zugänglichkeit der hinter den Hydraulikleitungen liegenden Komponenten des Riementriebs 2, insbesondere für den Austausch des Riemens 5 oder sonstige Wartungsarbeiten bzw. Instandsetzungsmaßnahmen, ist es somit erforderlich, dass der erste Leitungsabschnitt 10 und der zweite Leitungsabschnitt 11 der jeweiligen Leitung 9 voneinander getrennt werden können. Dabei soll die Trennung des ersten Leitungsabschnittes 10 und des zweiten Leitungsabschnittes 11 weitgehend leckagefrei durchgeführt werden. Hierzu wird die Absperrvorrichtung 12 betätigt, welche eine Trennung der fluidleitenden Verbindung zwischen dem ersten Leitungsabschnitt 10 und dem zweiten Leitungsabschnitt 11 ermöglicht, ohne dass diese drucklos geschaltet werden müssen.

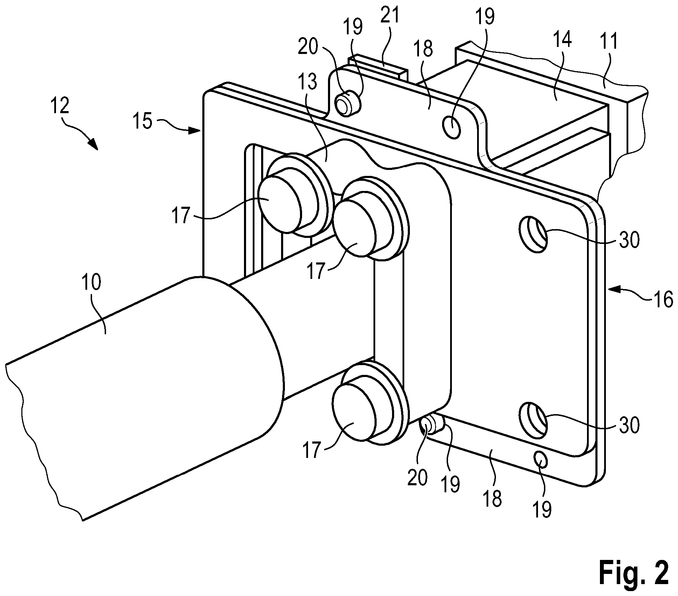

Der Aufbau und die Funktionsweise der jeweiligen Absperrvorrichtung 12 werden nachstehend anhand der Fig. 2 bis 6b näher erläutert. Die Absperrvorrichtung 12 weist eine in Fig. 2 dargestellte Durchlassstellung, in welcher einander zugewandte Öffnungen des ersten Leitungsabschnitts 10 und des zweiten Leitungsabschnittes 11 fluidleitend verbunden sind, und eine Schließstellung, in welcher der Durchfluss unterbrochen wird.

Fig. 2 zeigt eine schematische Darstellung der Absperrvorrichtung 12 mit dem daran angeordneten ersten Leitungsabschnitt 10. Der erste Leitungsabschnitt 10 ist an einen Koppelflansch 13 mit einer Durchgangsbohrung angeschlossen. Der in dieser Ansicht nicht sichtbare zweite Leitungsabschnitt 11 ist dem ersten Leitungsabschnitt 10 gegenüberliegend an einem Verteilerblock 14 angeschlossen. Zwischen dem Koppelflansch 13 und dem Verteilerblock 14 sind ein erster Schieber 15 und ein zweiter Schieber 16 angeordnet. Der erste Schieber 15 und der zweite Schieber 16 bilden eine Doppelschieberanordnung. Dazu sind der erste Schieber 15 und der zweite Schieber 16 an zumindest einer Stelle ihrer einander zugewandten Oberflächen formschlüssig miteinander verbunden. Hierzu weisen der erste Schieber 15 und der zweite Schieber 16 eine zueinander parallele Ausrichtung auf und liegen unmittelbar aneinander an. Für die Befestigung des Koppelflansches 13 an dem Verteilerblock 14 sind Flanschschrauben 17 vorgesehen, die sich durch den ersten Schieber 15 und den zweiten Schieber 16 hindurch erstrecken und von Gewindebohrungen 27 im Verteilerblock 14 aufgenommen werden. An dem zweiten Schieber 16 ist an dessen Ober- und Unterseite jeweils zumindest ein Befestigungsabschnitt 18 vorgesehen, welche jeweils zwei zueinander beabstandete Durchbohrungen 19 aufweisen. Die Durchbohrungen 19 in den Befestigungsabschnitten 18 dienen der Aufnahme von Befestigungsschrauben 20, durch die der zweite Schieber 16 mit einem an der Oberseite und der Unterseite des Verteilerblocks 14 angeordneten Abschnitt 21 verbunden wird.

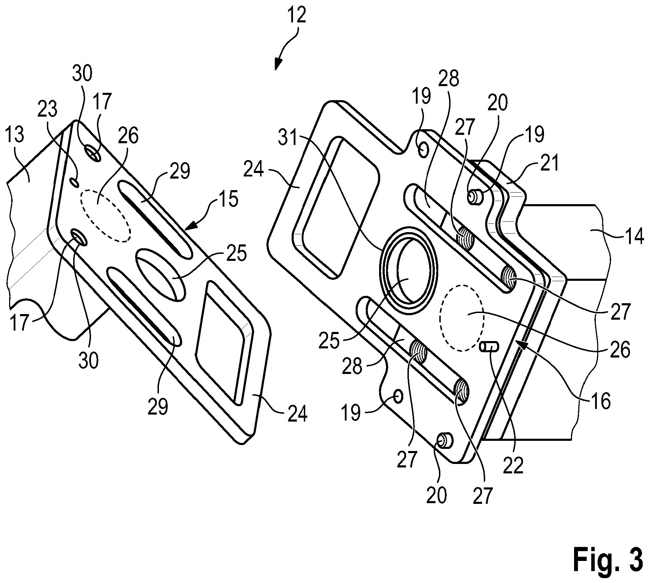

Fig. 3 zeigt eine schematische Darstellung der mittels der Absperrvorrichtung 12 verschlossenen und anschließend voneinander getrennten Leitungsabschnitte 10 und 11. Der erste Schieber 15 verschließt den Koppelflansch 13 und somit den daran befestigten ersten Schlauchabschnitt 10. Der zweite Schieber 16 verschließt den Verteilerblock 14 und somit den daran befestigten zweiten Schlauchabschnitt 11. Zur formschlüssigen Verbindung der Doppelschieberanordnung weist im dargestellten Ausführungsbeispiel der zweite Schieber 16 einen senkrecht zu seiner Oberfläche hervorstehenden zylindrischen Stift 22 auf, der in eine korrespondierende Öffnung 23 in der Oberfläche des ersten Schiebers 15 formschlüssig eingreift, wenn diese parallel zueinander angeordnet sind und flächig aneinander anliegen. Eine umgekehrte Anordnung von Stift 22 und Öffnung 23 ist selbstverständlich ebenfalls denkbar. Auf der dem Stift 22 bzw. der Öffnung 23 gegenüberliegenden Seite weisen der erste Schieber 15 und der zweite Schieber 16 jeweils einen gleich ausgeformten Betätigungsabschnitt 24 auf. Der Betätigungsabschnitt 24 dient dazu, durch ein Bewegen der Doppelschieberanordnung die Absperrvorrichtung 12 von der Durchlassstellung in die Schließstellung und umgekehrt zu überführen. Die Betätigung der Doppelschieberanordnung erfolgt entlang einer vertikal zur Längsachse der Leitungsabschnitte 10, 11 verlaufenden Bewegungsbahn.

Der erste und der zweite Schieber 15, 16 sind jeweils mit einer Durchgangsöffnung 25 sowie einer benachbart hierzu angeordneten Sperrfläche 26 versehen. Die Sperrfläche 26 ist auf der dem Betätigungsabschnitt 24 abgewandten Seite angeordnet. Die jeweilige Sperrfläche 26 des Schiebers 15 bzw. 16 weist auf ihrer dem Koppelflansch 13 bzw. dem Verteilerblock 14 zugewandten Seite einen Dichtring auf. Der jeweilige Dichtring wird bei der Bewegung der Doppelschieberanordnung koaxial zu einer Durchbohrung in dem Koppelflansch 13 bzw. einer koaxialen Durchbohrung 35 in dem Verteilerblock 14 positioniert, um diese in Umfangsrichtung abzudichten. Mittels der Befestigungsschrauben 20 wird der zweite Schieber 16 mit dem Verteilerblock 14 nach dem Erreichen der Schließstellung verbunden. Die Fixierung des ersten Schiebers 15 an dem Koppelflansch 13 erfolgt nach dem Erreichen der Schließstellung mittels der Flanschschrauben 17, die durch den Koppelflansch 13 hindurch in Gewindebohrungen 30 des ersten Schiebers 15 eingeschraubt werden.

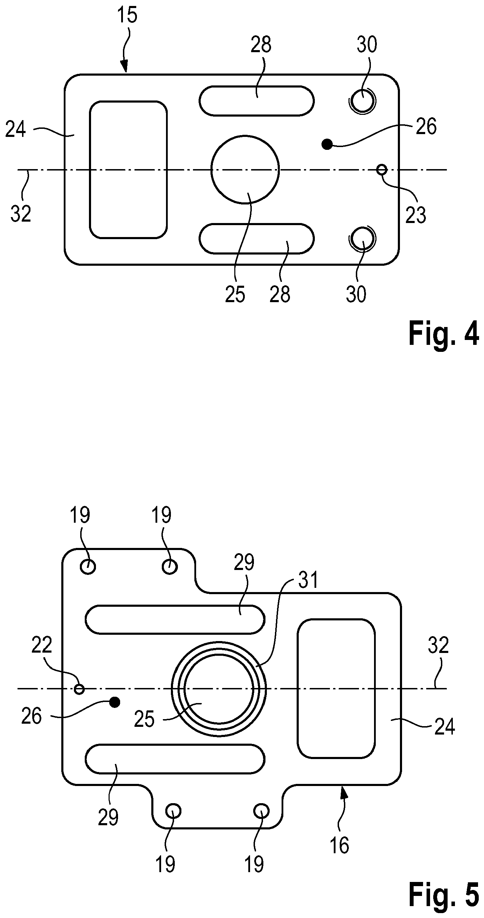

In Fig. 4 ist eine schematische Ansicht des ersten Schiebers 15 der Absperrvorrichtung 12 gezeigt. Dargestellt ist die dem zweiten Schieber 16 zugewandte Oberfläche des ersten Schiebers 15 der Doppelschieberanordnung. Mit dem Bezugszeichen 32 ist eine Längsachse des ersten Schiebers 15 bezeichnet. Die Durchgangsöffnung 25 ist vorzugsweise im Wesentlichen zentrisch in dem ersten Schieber 15 angeordnet. Parallel zu der Längsachse 32 erstrecken sich zwei Führungsausnehmungen 28 zwischen dem Betätigungsabschnitt 24 und die zwei separaten Gewindebohrungen 30. Die Führungsausnehmungen 28 und die beiden Gewindebohrungen 30 dienen der Aufnahme der Flanschschrauben 17, mit denen der erste Schieber 15, in Abhängigkeit von der Stellung der Absperrvorrichtung 12, an dem Koppelflansch 13 und/oder dem Verteilerblock 14 lösbar befestigt ist.

Fig. 5 zeigt eine schematische Ansicht des zweiten Schiebers 16 der Absperrvorrichtung 12. Dargestellt ist die dem ersten Schieber 15 zugewandte Oberfläche des zweiten Schiebers 16 der Doppelschieberanordnung. Der Aufbau des zweiten Schiebers 16 ähnelt dem des ersten Schiebers 15. Die Durchgangsöffnung 25 ist vorzugsweise ebenfalls im Wesentlichen zentrisch in dem zweiten Schieber 15 angeordnet. Koaxial zu der Durchgangsöffnung 25 ist ein Dichtring 31 angeordnet, der sich an der Oberfläche des ersten Schiebers 15 abstützt, so dass die Durchgangsöffnungen 25 abgedichtet sind. Parallel zu der Längsachse 32 erstrecken sich zwei Führungsausnehmungen 29 ausgehend von dem Betätigungsabschnitt 24 in Richtung des zylindrischen Stifts 22. Die beiden Führungsausnehmungen 29 des zweiten Schiebers 16 sind länger als die Führungsausnehmungen 28 des ersten Schiebers 15 ausgeführt. Liegen die beiden Schieber 15, 16 zur Ausbildung der Doppelschieberanordnung parallel aneinander, wie in Fig. 2 dargestellt, überlappen die Betätigungsabschnitte 24 und die Durchgangsöffnungen 25 einander fluchtend. Die jeweilige Führungsausnehmung 29 des zweiten Schiebers 16 erstreckt sich ausgehend von dem axialen Ende der jeweiligen Führungsausnehmung 28, welches dem Betätigungsabschnitt 24 zugewandt, ist bis zu den Gewindebohrungen 30 des ersten Schiebers 15. Durch die Führungsausnehmungen 28 und 29 erstrecken sich die Flanschschrauben17, mit denen der erste Schieber 15 an dem Koppelflansch 13 und dem Verteilerblock 14 lösbar befestigt ist.

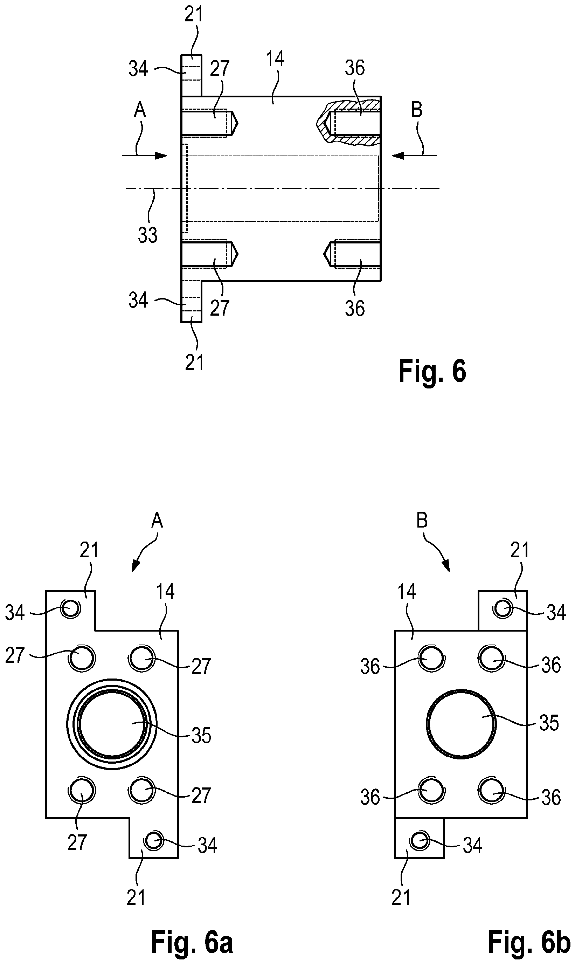

In Fig. 6 ist eine Seitenansicht des Verteilerblocks 14 der Absperrvorrichtung 12 dargestellt. In den Fig. 6a und 6b sind eine Vorderansicht A und eine Rückansicht B gemäß Fig. 6 des Verteilerblocks 14 dargestellt. Der Verteilerblock 14 weist eine koaxial zur Längsachse 33 angeordnete Durchbohrung 35. Die an der Oberseite und der Unterseite des Verteilerblocks 14 angeordneten Abschnitt 21 weisen jeweils Gewindebohrungen 34 auf, in welche die Befestigungsschrauben 20 zur Befestigung des zweiten Schiebers 16 eingeschraubt werden. Wie aus der in Fig. 6a dargestellten Vorderansicht ersichtlich ist, sind an der Stirnseite des Verteilerblocks 14 Gewindebohrungen 27 vorgesehen. Die Gewindebohrungen 27 nehmen die Flanschschrauben 17 auf, welche sich von dem Koppelflansch 13 durch die Führungsausnehmungen 28 des ersten Schiebers 15 und die Führungsausnehmungen 29 des zweiten Schiebers 16 erstrecken, wenn sich die Abdichtvorrichtung 12 in ihrer Schließstellung befindet. Die Darstellung der Rückansicht in Fig. 6b zeigt, dass mehrere Sacklochbohrungen 36 mit Innengewinde vorgesehen sind, die der Befestigung des Leitungsabschnittes 11 dienen.

Nachfolgend wird im Detail erläutert, wie zum Trennen der Leitungen 9 mittels der Absperrvorrichtung 12 vorgegangen wird, um die Absperrvorrichtung 12 von der Durchlassstellung in die Schließstellung zu überführen, wodurch anschließend eine Trennung der beiden Leitungsabschnitte 10, 11 durch die Absperrvorrichtung 12 verbundenen voneinander ermöglicht wird.

In einem ersten Schritt werden alle Befestigungsschrauben 20 entfernt, mit welchen der zweite Schieber 16 an den Abschnitten 21 mit dem Verteilerblock 14 verbunden ist. Anschließend werden in einem zweiten Schritt zwei Flanschschrauben 17, die auf der dem Betätigungsabschnitt 24 abgewandten Seite angeordnet sind, entfernt. Die zwei Flanschschrauben 17, die auf der dem Betätigungsabschnitt 24 zugewandten Seite angeordnet sind, werden in einem dritten Schritt geringfügig gelöst, insbesondere durch eine halbe Umdrehung der Flanschschrauben 17. Daraufhin werden in einem vierten Schritt durch das gleichzeitige Ziehen der beiden Schieber 15, 16 der Doppelschieberanordnung in axialer Richtung entlang der Längsachse 32 die Sperrflächen 26 des Schiebers 15 bzw. 16 an die Stelle der Durchgangsöffnungen 25 zwischen den Koppelflansch 13 und den Verteilerblock 14 bewegt. Durch die formschlüssige Verbindung des mit der Öffnung 23 in Eingriff stehenden zylindrischen Stiftes 22 wird bewirkt, dass beide Schieber 15, 16 der Doppelschieberanordnung gleichzeitig und gleichförmig bewegt werden. Die jeweilige Sperrfläche 26 wird somit vor die einander zugewandten Öffnungen von Koppelflansch 13 und Verteilerblock 14 gezogen, so dass die fluidleitende Verbindung der beiden Leitungsabschnitt 10, 11 von dem Doppelschieber unterbrochen wird. Die Länge der Bewegungsbahn der als Doppelschieberanordnung ausgeführten Schieber 15, 16 quer zu den Leitungsabschnitten 10, 11 wird durch den kürzeren Führungsabschnitt 28 in dem ersten Schieber 15 begrenzt.

Anschließend wird in einem fünften Schritt der erste Schieber 15 nur mit dem Koppelflansch 13 verbunden, indem die zuvor beiden gelösten und entfernten Flanschschrauben 17 in die separaten Gewindebohrungen 30 des ersten Schiebers 15 eingeschraubt werden. Der zweite Schieber 16 wird in einem sechsten Schritt mittels der ebenfalls zuvor entfernten Befestigungsschrauben 20 wieder an dem Verteilerblock 14 befestigt. Durch den ersten Schieber 15 ist der erste Leitungsabschnitt 10 verschlossen, während der zweite Schieber 16 den zweiten Leitungsabschnitt 11 verschließt, d.h. die Absperrvorrichtung 12 befindet sich in ihrer Schließstellung.

Um die beiden durch die Doppelschieberanordnung verschlossenen Leitungsabschnitte 10 und 11 voneinander zu trennen, werden in einem siebten Schritt die bisher nur gelösten Flanschschrauben 17, die sich durch die beiden Führungsabschnitte 28, 29 des ersten und zweiten Schiebers 15, 16 erstrecken, entfernt. Dadurch lassen sich der erste Schieber 15 und der zweite Schieber 16 respektive der erste Leitungsabschnitt 10 und der zweite Leitungsabschnitt 11 weitgehend leckagefrei voneinander lösen.

Zur fluidleitenden Wiederverbindung der beiden Leitungsabschnitte 10 und 11 miteinander wird in umgekehrter Reihenfolge der vorstehend beschriebenen Schritte verfahren.

**Bezugszeichenliste**

| | | | |
|---|---|---|---|
| 1 | Arbeitsmaschine | 30 | Gewindebohrung |
| 2 | Riementrieb | 31 | Dichtring |
| 3 | Maschinengehäuse | 32 | Längsachse von 15, 16 |
| 4 | Verteilergetriebe | 33 | Längsachse von 14 |
| 5 | Riemen | 34 | Gewindebohrung |
| 6 | Abtriebsscheibe | 35 | Durchbohrung |
| 7 | Antriebsscheibe | 36 | Sacklochbohrung |
| 8 | Vorgelegepunkt | | |
| 9 | Leitung | | |
| 10 | Erster Leitungsabschnitt | | |
| 11 | Zweiter Leitungsabschnitt | | |
| 12 | Absperrvorrichtung | | |
| 13 | Koppelflansch | | |
| 14 | Verteilerblock | | |
| 15 | Erster Schieber | | |
| 16 | Zweiter Schieber | | |
| 17 | Flanschschraube | | |
| 18 | Befestigungsabschnitt | | |
| 19 | Durchbohrung | | |
| 20 | Befestigungsschraube | | |
| 21 | Abschnitt von 14 | | |
| 22 | Stift | | |
| 23 | Öffnung | | |
| 24 | Betätigungsabschnitt | | |
| 25 | Durchgangsöffnung | | |
| 26 | Sperrfläche | | |
| 27 | Gewindebohrung | | |
| 28 | Führungsausnehmung | | |
| 29 | Führungsausnehmung | | |

## Patentansprüche

1. Leitung (9) mit einer Absperrvorrichtung (12), die in einem Koppelbereich zwischen einem ersten Leitungsabschnitt (10) und einem zweiten Leitungsabschnitt (11) der zumindest einen Leitung (9), insbesondere eines Hydrauliksystems, angeordnet ist, wobei die Absperrvorrichtung (12) eine Durchlassstellung, in welcher die beiden Leitungsabschnitte (10, 11) fluidleitend verbunden sind, und eine Schließstellung, in welcher der Durchfluss unterbrochen ist, aufweist, wobei der erste Leitungsabschnitt (10) in dem Koppelbereich einen Koppelflansch (13) aufweist, der mit einem Verteilerblock (14) der Absperrvorrichtung (12) verbindbar ist, an dem der zweite Leitungsabschnitt (11) angeschlossen ist, wobei dem Koppelflansch (13) ein erster Schieber (15) und dem Verteilerblock (14) ein zweiter Schieber (16) zugeordnet ist, wobei die beiden Schieber (15, 16) eine Doppelschieberanordnung bilden und wobei durch ein Bewegen der Doppelschieberanordnung die Absperrvorrichtung (12) von der Durchlassstellung in die Schließstellung und umgekehrt überführbar ist, **dadurch gekennzeichnet, dass** der erste Schieber (15) und der zweite Schieber (16) jeweils zumindest eine Führungsausnehmung (28, 29) aufweisen, die sich abschnittsweise in Längsrichtung des jeweiligen Schiebers (15, 16) erstreckt, wobei sich Befestigungsmittel durch die Führungsausnehmungen (28, 29) erstrecken.

2. Leitung (9) mit einer Absperrvorrichtung (12) nach Anspruch 1, **dadurch gekennzeichnet, dass** die Doppelschieberanordnung zwischen dem Koppelflansch (13) und dem Verteilerblock (14) angeordnet ist.

3. Leitung (9) mit einer Absperrvorrichtung (12) nach Anspruch 1 oder 2, **dadurch gekennzeichnet, dass** der erste Schieber (15) und der zweite Schieber (16) in Schließstellung der Absperrvorrichtung (12) voneinander trennbar sind.

4. Leitung (9) mit einer Absperrvorrichtung (12) nach Anspruch 1 bis 3, **dadurch gekennzeichnet, dass** der erste Schieber (15) und der zweite Schieber (16) zur Ausbildung der Doppelschieberanordnung parallel zueinander verlaufend angeordnet sind.

5. Leitung (9) mit einer Absperrvorrichtung (12) nach einem der vorangehenden Ansprüche, **dadurch gekennzeichnet, dass** der erste Schieber (15) und der zweite Schieber (16) zur Ausbildung der Doppelschieberanordnung formschlüssig miteinander verbunden sind.

6. Leitung (9) mit einer Absperrvorrichtung (12) nach einem der vorangehenden Ansprüche, **dadurch gekennzeichnet, dass** der erste Schieber (15) und der zweite Schieber (16) jeweils einen Betätigungsabschnitt (24) aufweisen, mittels derer die beiden Schieber (15, 16) manuell betätigbar sind, um die Doppelschieberanordnung von der Durchlassstellung in die Schließstellung und umgekehrt zu überführen.

7. Leitung (9) mit einer Absperrvorrichtung (12) nach einem der vorangehenden Ansprüche, **dadurch gekennzeichnet, dass** die Bewegung zum Überführen des ersten Schiebers (15) und des zweiten Schiebers (16) von der Durchlassstellung in die Schließstellung und umgekehrt durch zumindest einen Anschlag begrenzbar ist.

8. Leitung (9) mit einer Absperrvorrichtung nach einem der vorangehenden Ansprüche, **dadurch gekennzeichnet, dass** der erste Schieber (15) und der zweite Schieber (16) jeweils eine Durchgangsöffnung (25) und eine benachbart angeordnete Sperrfläche (26) aufweisen.

9. Landwirtschaftliche Arbeitsmaschine (1), umfassend zumindest einen Riementrieb (2), der sich abschnittsweise in Längsrichtung der Arbeitsmaschine (1) parallel zur Wandung eines Maschinengehäuses (3) der Arbeitsmaschine (1) erstreckt, sowie ein Hydrauliksystem, welches zumindest zwei Leitungen (9) aufweist, die eine durch den Riementrieb (2) zu der Wandung beabstandete Anordnung aufweisen, wobei die zumindest zwei Leitungen (9) einen ersten Leitungsabschnitt (10) und einen zweiten Leitungsabschnitt (11) aufweisen, die den Riementrieb (2) abschnittsweise durchsetzen, **dadurch gekennzeichnet, dass** die zumindest zwei Leitungen (9) jeweils als eine Leitung (9) mit einer Absperrvorrichtung (12) nach einem der Ansprüche 1 bis 8 ausgebildet sind, wobei der erste Leitungsabschnitt (10) und der zweite Leitungsabschnitt (11) der jeweiligen Leitung (9) durch jeweils eine Absperrvorrichtung (12) trennbar miteinander verbunden sind.

10. Landwirtschaftliche Arbeitsmaschine (1) nach Anspruch 9, **dadurch gekennzeichnet, dass** das Hydrauliksystem als ein hydrostatisches Fahrantriebssystem der Arbeitsmaschine (1) ausgebildet ist.

11. Verfahren zum Trennen und Verbinden einer Leitung (9) mittels einer Absperrvorrichtung (12), die in einem Koppelbereich zwischen einem ersten Leitungsabschnitt (10) und einem zweiten Leitungsabschnitt (11) der Leitung (9) eines Hydrauliksystems, insbesondere für eine landwirtschaftliche Arbeitsmaschine (1), angeordnet wird, wobei die Absperrvorrichtung (12) eine Durchlassstellung, in welcher die beiden Leitungsabschnitte (10, 11) fluidleitend verbunden werden, und eine Schließstellung, in welcher der Durchfluss unterbrochen wird, aufweist, wobei der erste Leitungsabschnitt (10) in dem Koppelbereich einen Koppelflansch (13) aufweist, der mit einem Verteilerblock (14) der Absperrvorrichtung (12) verbunden wird, an dem der zweite Leitungsabschnitt (11) angeschlossen wird, wobei dem Koppelflansch (13) ein erster Schieber (15) und dem Verteilerblock (14) ein zweiter Schieber (16) zugeordnet ist, wobei die beiden Schieber (15, 16) eine Doppelschieberanordnung bilden und wobei durch ein Bewegen der Doppelschieberanordnung die Absperrvorrichtung (12) von der Durchlassstellung in die Schließstellung und umgekehrt überführt wird, wobei in der Schließstellung der Absperrvorrichtung (12) der erste Leitungsabschnitt (10) von dem ersten Schieber (15) und der zweite Leitungsabschnitt (11) von dem zweiten Schieber (16) verschlossen wird, so dass die beiden Leitungsabschnitte (10, 11) voneinander trennbar sind, **dadurch gekennzeichnet, dass** die Leitung (9) nach einem der Ansprüche 1 bis 8 ausgebildet ist.

## Claims

1. A line (9) with a shut off device (12) which is disposed in a coupling region between a first line section (10) and a second line section (11) of at least one line (9), in particular of a hydraulic system, wherein the shut off device (12) has an open position in which the two line sections (10, 11) are connected in fluid communication, and a closed position in which the flow is interrupted, wherein in the coupling region, the first line section (10) has a coupling flange (13) which can be connected to a distribution block (14) of the shut off device (12) to which the second line section (11) is attached, wherein a first slide (15) is associated with the coupling flange (13) and a second slide (16) is associated with the distribution block (14), wherein the two slides (15, 16) form a dual slide assembly and wherein by moving the dual slide assembly, the shut off device (12) can be transposed from the open position to the closed position and vice versa, **characterized in that** the first slide (15) and the second slide (16) respectively have at least one guide recess (28, 29), sections of which extend in the longitudinal direction of the respective slide (15, 16), wherein fastening means extend through the guide recesses (28, 29).

2. The line (9) with a shut off device (12) according to claim 1, **characterized in that** the dual slide assembly is disposed between the coupling flange (13) and the distribution block (14).

3. The line (9) with a shut off device (12) according to claim 1 or claim 2, **characterized in that** the first slide (15) and the second slide (16) can be separated from each other in the closed position of the shut off device (12).

4. The line (9) with a shut off device (12) according to claim 1 to 3, **characterized in that** the first slide (15) and the second slide (16) run parallel with respect to each other in order to form the dual slide assembly.

5. The line (9) with a shut off device (12) according to one of the preceding claims, **characterized in that** the first slide (15) and the second slide (16) are connected in an interlocking manner in order to form the dual slide assembly.

6. The line (9) with a shut off device (12) according to one of the preceding claims, **characterized in that** the first slide (15) and the second slide (16) respectively have an actuation section (24) by means of which the two slides (15, 16) can be manually actuated in order to transpose the dual slide assembly from the open position into the closed position and vice versa.

7. The line (9) with a shut off device (12) according to one of the preceding claims, **characterized in that** the movement for transposing the first slide (15) and the second slide (16) from the open position into the closed position and vice versa can be limited by at least one stop.

8. The line (9) with a shut off device (12) according to one of the preceding claims, **characterized in that** the first slide (15) and the second slide (16) respectively have a through opening (25) and an adjacently disposed stop surface (26).

9. An agricultural working machine (1) comprising at least one belt drive (2) which extends in sections in the longitudinal direction of the working machine (1) parallel to the wall of a machine housing (3) of the working machine (1), as well as a hydraulic system which has at least two lines (9) which are separated from the wall by the belt drive (2), wherein the at least two lines (9) have a first line section (10) and a second line section (11) which pass through sections of the belt drive (2), **characterized in that** the at least two lines (9) are respectively configured as a line (9) with a shut off device (12) according to one of claims 1 to 8, wherein the first line section (10) and the second line section (11) of the respective line (9) are connected together in a separable manner by means of a respective shut off device (12).

10. The agricultural working machine (1) according to claim 9, **characterized in that** the hydraulic system is configured as a hydrostatic propulsion system of the working machine (1).

11. A method for separating and connecting a line (9) by means of a shut off device (12) which is disposed in a coupling region between a first line section (10) and a second line section (11) of the line (9) of a hydraulic system, in particular for an agricultural working machine (1), wherein the shut off device (12) has an open position in which the two line sections (10, 11) are connected in fluid communication, and a closed position in which the flow is interrupted, wherein in the coupling region, the first line section (10) has a coupling flange (13) which is connected to a distribution block (14) of the shut off device (12) and to which the second line section (11) is attached, wherein a first slide (15) is associated with the coupling flange (13) and a second slide (16) is associated with the distribution block (14), wherein the two slides (15, 16) form a dual slide assembly and wherein by moving the dual slide assembly, the shut off device (12) is transposed from the open position to the closed position and vice versa, wherein in the closed position of the shut off device (12), the first line section (10) is closed off by the first slide (15) and the second line section (11) is closed off by the second slide (16) so that both line sections (10, 11) can be separated from each other, **characterized in that** the line (9) is configured in accordance with one of claims 1 to 8.

## Revendications

1. Conduite (9) comprenant un dispositif d'arrêt (12) qui est disposé dans une zone de couplage entre une première portion de conduite (10) et une seconde portion de conduite (11) de la au moins une conduite (9), en particulier d'un système hydraulique, le dispositif d'arrêt (12) comportant une position de passage, dans laquelle les deux portions de conduite (10, 11) sont reliées en conduite de fluide, et une position de fermeture, dans laquelle l'écoulement est interrompu, la première portion de conduite (10) comportant dans la zone de couplage une bride de couplage (13) qui peut être reliée à un bloc répartiteur (14) du dispositif d'arrêt (12) auquel la seconde portion de conduite (11) est raccordée, à la bride de couplage (13) étant associé un premier tiroir (15) et au bloc répartiteur (14) étant associé un second tiroir (16), les deux tiroirs (15, 16) formant un agencement à double tiroir, et le dispositif d'arrêt (12) pouvant être transféré, par un déplacement de l'agencement à double tiroir, de la position de passage à la position de fermeture et inversement, **caractérisée en ce que** le premier tiroir (15) et le second tiroir (16) comportent respectivement au moins un évidement de guidage (28, 29) qui s'étend par portions dans la direction longitudinale du tiroir respectif (15, 16), des moyens de fixation s'étendant à travers les évidements de guidage (28, 29).

2. Conduite (9) comprenant un dispositif d'arrêt (12) selon la revendication 1, **caractérisée en ce que** l'agencement à double tiroir est disposé entre la bride de couplage (13) et le bloc répartiteur (14).

3. Conduite (9) comprenant un dispositif d'arrêt (12) selon la revendication 1 ou 2, **caractérisée en ce que**, dans la position de fermeture du dispositif d'arrêt (12), le premier tiroir (15) et le second tiroir (16) peuvent être séparés l'un de l'autre.

4. Conduite (9) comprenant un dispositif d'arrêt (12) selon la revendication 1 à 3, **caractérisée en ce que** le premier tiroir (15) et le second tiroir (16) sont disposés de manière déplaçable parallèlement l'un à l'autre pour former l'agencement à double tiroir.

5. Conduite (9) comprenant un dispositif d'arrêt (12) selon une des revendications précédentes, **caractérisée en ce que** le premier tiroir (15) et le second tiroir (16) sont reliés l'un à l'autre par conjugaison de formes pour former l'agencement à double tiroir.

6. Conduite (9) comprenant un dispositif d'arrêt (12) selon une des revendications précédentes, **caractérisée en ce que** le premier tiroir (15) et le second tiroir (16) comportent respectivement une portion d'actionnement (24) au moyen de laquelle les deux tiroirs (15, 16) peuvent être actionnés manuellement afin de transférer l'agencement à double tiroir de la position de passage à la position de fermeture et inversement.

7. Conduite (9) comprenant un dispositif d'arrêt (12) selon une des revendications précédentes, **caractérisée en ce que** le déplacement pour transférer le premier tiroir (15) et le second tiroir (16) de la position de passage à la position de fermeture et inversement peut être limité par au moins une butée.

8. Conduite (9) comprenant un dispositif d'arrêt selon une des revendications précédentes, **caractérisée en ce que** le premier tiroir (15) et le second tiroir (16) comportent respectivement une ouverture de passage (25) et une surface d'arrêt (26) disposée à côté.

9. Machine de travail agricole (1) incluant au moins un entraînement à courroie (2) qui s'étend par portions dans la direction longitudinale de la machine de travail (1) parallèlement à la paroi d'un carter de machine (3) de la machine de travail (1), ainsi qu'incluant un système hydraulique qui comprend au moins deux conduites (9) qui présentent un agencement distant de la paroi du fait de l'entraînement à courroie (2), les au moins deux conduites (9) comportant une première portion de conduite (10) et une seconde portion de conduite (11) qui traversent par portions l'entraînement à courroie (2), **caractérisée en ce que** les au moins deux conduites (9) sont conçues respectivement sous la forme d'une conduite (9) comprenant un dispositif d'arrêt (12) selon une des revendications 1 à 8, la première portion de conduite (10) et la seconde portion de conduite (11) de la conduite respective (9) étant reliées l'une à l'autre de manière séparable par l'intermédiaire respectivement d'un dispositif d'arrêt (12).

10. Machine de travail agricole (1) selon la revendication 9, **caractérisée en ce que** le système hydraulique est conformé en système de transmission hydrostatique de la machine de travail (1).

11. Procédé pour séparer et relier une conduite (9) au moyen d'un dispositif d'arrêt (12) qui est disposé dans une zone de couplage entre une première portion de conduite (10) et une seconde portion de conduite (11) de la conduite (9) d'un système hydraulique, en particulier pour une machine de travail agricole (1), le dispositif d'arrêt (12) comportant une position de passage, dans laquelle les deux portions de conduite (10, 11) sont reliées en conduite de fluide, et une position de fermeture, dans laquelle l'écoulement est interrompu, la première portion de conduite (10) comportant dans la zone de couplage une bride de couplage (13) qui est reliée à un bloc répartiteur (14) du dispositif d'arrêt (12), auquel la seconde portion de conduite (11) est reliée, à la bride de couplage (13) étant associé un premier tiroir (15) et au bloc répartiteur (14) étant associé un second tiroir (16), les deux tiroirs (15, 16) formant un agencement à double tiroir, et le dispositif d'arrêt (12) pouvant être transféré, par un déplacement de l'agencement à double tiroir, de la position de passage à la position de fermeture et inversement, dans la position de fermeture du dispositif d'arrêt (12) la première portion de conduite (10) étant fermée par le premier tiroir (15) et la seconde portion de conduite (11) étant fermée par le second tiroir (16), de sorte que les deux portions de conduite (10, 11) peuvent être séparées l'une de l'autre, **caractérisé en ce que** la conduite (9) est conçue selon une des revendications 1 à 8.
